# EUROPÄISCHE PATENTSCHRIFT

(11) **EP 3 348 720 B1**
(45) Veröffentlichungstag und Bekanntmachung des Hinweises auf die Patenterteilung: **29.04.2020**
(21) Anmeldenummer: 17151321.1
(22) Anmeldetag: 13.01.2017
(51) Int. Cl.: E03F 7/04

(54) **VORRICHTUNG ZUR ABWASSERFÜHRUNG**
DEVICE FOR CONVEYING WASTEWATER
DISPOSITIF D'ÉVACUATION D'EAUX USÉES

(43) Veröffentlichungstag der Anmeldung: 18.07.2018
(73) Patentinhaber: Kessel AG, 85101 Lenting (DE)
(72) Erfinder: Kessel, Bernhard, 85101 Lenting (DE)
(74) Vertreter: Grünecker Patent- und Rechtsanwälte PartG mbB

(56) Entgegenhaltungen:
- EP-A1- 3 026 185
- DE-A1-102005 009 777
- US-A1- 2012 255 628

## Beschreibung

Die Erfindung betrifft eine Vorrichtung der im Oberbegriff des Anspruchs 1 genannten Art.

Solche Vorrichtungen, insbesondere Rückstauverschlüsse, sind von den Herstellern so konzipiert, dass sie entweder in freiem Einbau mit freiliegendem, ggf. Zusatzeinrichtungen tragendem Deckel oder im sogenannten Schachteinbau installierbar sind. Beim Schachteinbau ist der Deckel und sind die Zusatzeinrichtungen vom Inneren des Schachts her zugänglich, der auf einer am Gehäuse festgelegten Schachttasse aufgebaut ist.

Bei einer gattungsgemäßen Vorrichtung, einem Rückstauverschluss für fäkalienfreies Abwasser, der von der Anmelderin seit Jahren unter dem Handelsnamen "Staufix" vertrieben wird, und ausschließlich für freien Einbau bestimmt ist, sind an den Längsseiten des Deckels nach unten ragende Leisten angeformt, die mit vier Exzenterverschlüssen bei montiertem Deckel von oben außen über eine angrenzend an den Öffnungsrand umlaufende Außenwand des Gehäuses greifen. Diese Außenwand wird unterseitig durch einen umlaufenden Falz begrenzt. Aufgabe dieser Beulsicherung ist es, bei Überdruck im Gehäuse, beispielsweise hervorgerufen durch eine Rückstausituation, zu verhindern, dass sich die Gehäusewand lokal ausbeult und die dort innen anliegende Deckeldichtung ihre Dichtfunktion verliert und Abwasser austritt. Die für den Eingriff der Leisten erforderliche Bauhöhe vergrößert die Abmessungen des Gehäuses in Hochrichtung unzweckmäßig. Außerdem verschmutzt das Gehäuse in diesen relativ großflächigen, teils hinterschnittenen Bereichen, bei längerer Gebrauchsdauer erheblich, so dass im Falle einer Inspektion oder einer Wartung oder eines Austausches von Einsatzteilen der Vorrichtung zunächst aufwändige Reinigungsarbeiten erforderlich sind, ehe der Deckel entfernt wird. Staufix für fäkalienhaltiges Abwasser wurde mit zusätzlichem baulichem Aufwand auch schon für Schachteinbau verwendet, z.B. in eine Bodenplatte einbetoniert.

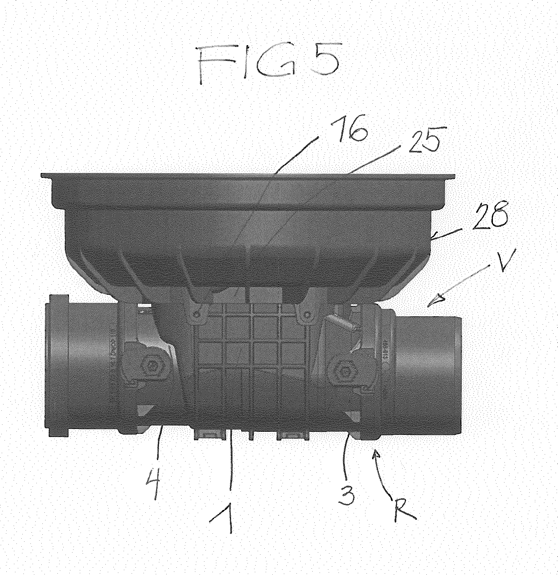

Die aus DE 10 2005 009 777 A1 bekannte Vorrichtung ist sowohl im freien Einbau als auch im Schachteinbau verwendbar. Das Gehäuse ist aus Polymerbeton hergestellt. Bei der für den Schachteinbau konzipierten Ausführungsform der Fig. 5 steht von einem Isolierflansch des Gehäuses ein kragenartiger Ringflansch hoch, in welchen ein Aufsatzteil, zum Beispiel eine Schachttassse, innen eng eingesteckt wird. Der Ringflansch erhöht einerseits die Bauhöhe des Gehäuses beträchtlich, was für freien Einbau unerwünscht ist. Andererseits ist allein durch das enge Einstecken des Aufsatzteils keine zuverlässige Abdichtwirkung gegeben. Beim Gehäuse für freien Einbau ist kein Ringflansch auf dem Isolierflansch vorgesehen, und somit das Gehäuse niedriger.

Es ist ferner eine Rückstauverschluss-Vorrichtung auf dem Markt, bei der der Deckel umfangsseitig durch mehrere Schrauben festgelegt ist, die für ausreichende Querstabilität gegen eine Beulneigung der Gehäusewand sorgen und den Deckel abgedichtet festlegen. Diese Vorrichtung ist für einen Schachteinbau konzipiert, indem am Öffnungsrand des Gehäuses eine Schachttasse einstückig angeformt ist. Der Schacht selbst ist dann mit einer Radialdichtung innen in die Schachttasse eingesteckt und fixiert. Durch die angeformte Schachttasse hätte die Vorrichtung für freien Einbau unzweckmäßig große Abmessungen in Querrichtung, vor allem an den Längsseiten, weil die runde Schachttasse weit über das Gehäuse nach außen vorspringt. Außerdem hat das Gehäuse auch in Hochrichtung unzweckmäßig große Abmessungen, da sich die Schachttasse zum sicheren Einstecken des Schachts relativ weit nach oben über den Deckel erstreckt.

Der Erfindung liegt die Aufgabe zugrunde, eine Vorrichtung der eingangs genannten Art anzugeben, die bei gesteigerter Betriebssicherheit und kompakter Bauhöhe eine einfache Handhabung ermöglicht und wahlweise im freien Einbau oder im Schachteinbau innerhalb eines Abwasserstrangs installierbar ist.

Die gestellte Aufgabe wird mit den Merkmalen des Anspruchs 1 gelöst.

Die sozusagen in die Bauhöhe des Deckels integrierten Beulsicherungen wirken gleichermaßen bei Überdruck wie bei Unterdruck gegen unzweckmäßige Verformungen der Gehäusewand, die zu Undichtigkeiten oder Dichtungsschäden führen könnten. Obwohl ein großflächiger und langer Kontakt zwischen den Eingriffselementen und den Stützelementen gegeben ist, kann der Deckel nahezu bündig eingesetzt sein. Dennoch wird für die Beulsicherungs-Aufgabe unterhalb des Öffnungsrandes des Gehäuses keine Bauhöhe vergeudet. Vielmehr liegen im Deckelbereich und dort am Gehäuse nur minimale Flächen und/oder Höhen vor, an denen sich Verschmutzungen ablagern können, so dass für Inspektionen oder Wartungen leichte Reinigbarkeit gegeben ist. Die Handhabung ist einfach, weil beim Einsetzen des Deckels die Eingriffselemente sozusagen selbsttätig in die Stützelemente eindringen, dabei den Deckel führen. Der Deckel lässt sich auch wieder leicht ausheben, da die Stützelemente die Eingriffselemente allseits umfassen und somit Verschmutzungen oder Ablagerungen dort kaum Zutritt finden. Da die Beulsicherungen innerhalb der Außenkontur des Öffnungsrandes und oben im Deckel untergebracht sind, ist die gleiche Vorrichtung mit kompakten Abmessungen in Hoch- und Querrichtung nicht nur zum freien Einbau sondern wahlweise auch zum Schachteinbau einsetzbar, beispielsweise mit einer über die Außenkontur gesteckten Schachttasse für einen Schachtbau. Dabei weist bei der für wahlweisen Schachteinbau konzipierten, aber auch frei einbaubaren Vorrichtung, insbesondere einem Rückstauverschluss, das Gehäuse in der Außenkontur des Öffnungsrandes, beispielsweise über einen schmalen Stützrand angrenzend an den Öffnungsrand und die Beulsicherungen, eine umlaufende, nach außen offene Dichtungsnut für eine Schachttassen-Radialdichtung auf. Bei freiem Einbau der Vorrichtung stört die dann nicht benutzte Dichtungsnut nicht. Das Gehäuse wird dadurch nicht verbreitert und bleibt vor allem auch in Hochrichtung kompakt. Jedoch ist die Möglichkeit gegeben, im Schachteinbau die Dichtungsnut zum Unterbringen einer Radialdichtung zu nutzen.

Um eine sichere Kraftübertragung, beispielsweise bei einer Überdrucksituation im Gehäuse sicherzustellen, ist es zweckmäßig, wenn sich das eingesteckte Eingriffselement zumindest bis zum freien Ende des Stützelementes erstreckt. Vorzugsweise ist hier eine gegenseitige Eingriffstiefe zwischen dem Stützelement und dem Eingriffselement gegeben, die größer als ein Aushebehub einer Deckel-Radialdichtung aus der Inspektionsöffnung ist. Dadurch wird beim Herausheben des Deckels den Beulsicherungen eine zusätzliche Aufgabe verliehen, nämlich für das ordnungsgemäße Austreten der Deckeldichtung zu sorgen, und beim Einsetzen des Deckels die Deckeldichtung ordnungsgemäß in das Gehäuse einzuführen, was insbesondere bei Schachteinbau mit gegebenenfalls komplizierten Zugangsmöglichkeiten wichtig sein kann.

Nach einem wichtigen Aspekt der Erfindung bilden die Ausbeulsicherungen aufgrund ihrer Ausbildung Führungsvorrichtungen zum Einbringen und Ausheben der an einem unterseitigen Falz des Deckels angeordneten Deckel-Radialdichtung in und aus der Inspektionsöffnung. Dies vereinfacht die Handhabung, insbesondere bei Schachteinbau der Vorrichtung.

Im Hinblick auf eine großflächige und stabile Kraftübertragung in jeder Beulsicherung, z.B. bei einer Überdruck- und/oder Unterdrucksituation im Gehäuse, ist es zweckmäßig, wenn das Eingriffselement einen annähernd rechteckigen, in Verlaufsrichtung der Längsseite des Öffnungsrandes langgestreckten Vollquerschnitt aufweist, dessen Länge ein Vielfaches der Stärke beträgt. Vorzugsweise, auch aus Entformungsgründen, kann der Querschnitt des Eingriffselements in Richtung zu seinem freien Ende allmählich abnehmen, kann die innere Seite gerade und kann die Außenseite konvex gekrümmt sein. Der Querschnitt der Einstecköffnung im Deckel sowie des kaminartigen Stützelementes kann hingegen rechteckig sein. Die konvexe Außenseite des Eingriffselementes kann zum freien Ende hin abgeschrägt oder abgerundet sein, um einen leichten Eintritt des Eingriffselementes in die Einstecköffnung sicherzustellen.

Im Hinblick auf eine sichere Krafteinleitung und auch zur Aussteifung des fast bündig einsetzbaren Deckels kann es zweckmäßig sein, wenn sich gegenüberliegende Stützelemente der Beulsicherungen über eine an der Deckeloberseite eingegliederte, erhabene Versteifungsrippe verbunden sind.

Zweckmäßig verläuft die Dichtungsnut in der Außenkontur des Öffnungsrandes in einer zum Öffnungsrand zumindest im Wesentlichen parallelen Dichtebene möglichst knapp unterhalb des Öffnungsrandes. Diese Dichtebene für die Schachttasse kann auf der gleichen Höhe liegen wie die Dichtebene des Deckels im Inneren der Inspektionsöffnung. Dadurch werden auch bei einem Schachteinbau großflächige und/oder hinterschnittene freiliegende Bereiche im Deckelbereich vermieden, in denen sich Verschmutzungen konzentriert absetzen könnten. In der Schachttasse kann die Deckeloberseite im Wesentlichen bündig mit dem Schachtgrund in der Schachttasse liegen, so dass sich dort kaum Verschmutzungen ablagern.

In einer Ausführungsform der Vorrichtung, insbesondere eines Rückstauverschlusses, weist das Gehäuse im Wesentlichen zum Öffnungsrand parallele und höhenversetzte Rohrstutzen auf, mit denen die Vorrichtung in einen Abwasserstrang eingliederbar ist. Das erfindungsgemäße Konzept ermöglicht es, dass die durch die außenliegende Dichtungsnut in der Außenkontur des Öffnungsrandes definierte Dichtebene zumindest für die Schachttasse oberhalb der Rohrstutzen des Gehäuses platziert ist, ohne dort zusätzliche Bauhöhe des Gehäuses in Kauf nehmen zu müssen.

In einer Ausführungsform der Vorrichtung ist auf dem Gehäuse eine Schachttasse für einen die Vorrichtung zugänglich enthaltenden Schacht montiert. Die Schachttasse ist mit einem Haltekragen außen über die Außenkontur des Öffnungsrandes des Gehäuses gesteckt und wird in der durch die außenliegende Dichtungsnut definierten Dichtebene mittels einer in der Dichtungsnut angeordneten Radialdichtung abgedichtet. An der Außenseite des Gehäuses vorgesehene Verankerungsstellen ermöglichen die sichere Verankerung der abgedichteten Schachttasse am Gehäuse. Die Radialdichtung bietet den Vorteil, axiale Relativbewegungen zwischen dem Gehäuse und dem Schachtaufsatzteil zu schlucken bzw. bei der Montage oder Demontage ohne Schaden zu überstehen.

Als Kern der Erfindung sind das Gehäuse und der Deckel der Vorrichtung so konzipiert, dass trotz der Beulsicherungen im Deckelrandbereich möglichst wenig Bauhöhe oder nach außen überstehende Teile vorliegen, und dennoch die Vorrichtung sowohl für freien Einbau als auch wahlweise Schachteinbau nutzbar ist.

Ausführungsformen des Erfindungsgegenstandes werden anhand der Zeichnung erläutert. Es zeigen:
- Fig. 1: eine Perspektivansicht einer Vorrichtung mit festgelegtem Deckel in freiem Einbau,
- Fig. 2: das Gehäuse der Vorrichtung von Fig. 1 bei abgenommenem Deckel,
- Fig. 3: einen Detailschnitt in der Schnittebene III-III in Fig. 1,
- Fig. 4: eine Perspektivansicht einer weiteren Ausführungsform der Vorrichtung mit festgelegtem Deckel,
- Fig. 5: eine Seitenansicht der Vorrichtung beispielsweise der Fig. 1, 2 und 3, vorbereitet für Schachteinbau,
- Fig. 6: eine Draufsicht auf die Vorrichtung von Fig. 5, und
- Fig. 7: eine Perspektivansicht, teilweise im Schnitt, einer Vorrichtung beispielsweise der Fig. 1 bis 4 im Schachteinbau.

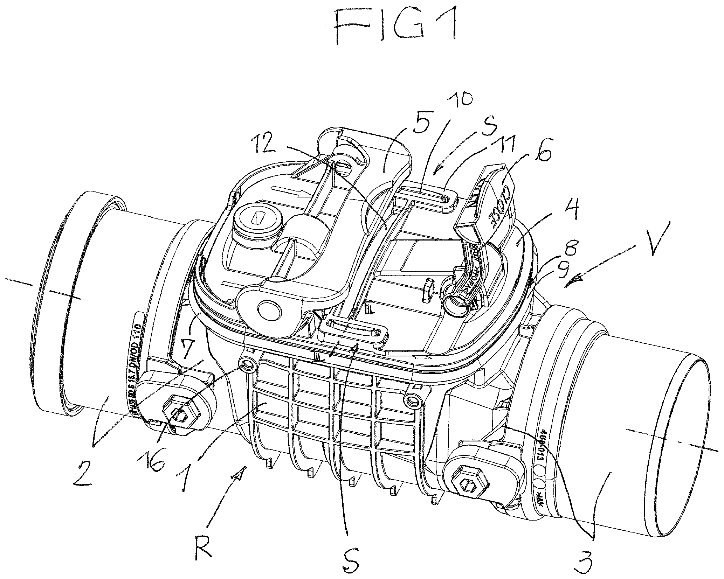

Die Fig. 1 bis 3 verdeutlichen eine Vorrichtung V anhand des nicht beschränkenden Beispiels eines Rückstauverschlusses R. Die Vorrichtung ist wahlweise zum freien Einbau oder Schachteinbau konzipiert und dient allgemein zur Abwasserführung in einem Abwasserstrang.

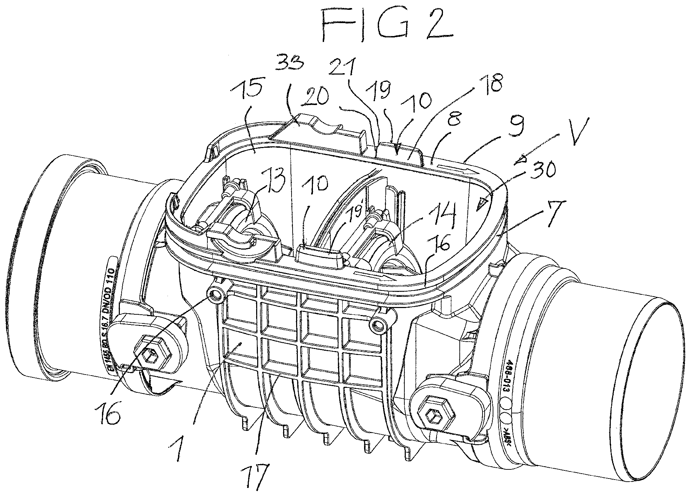

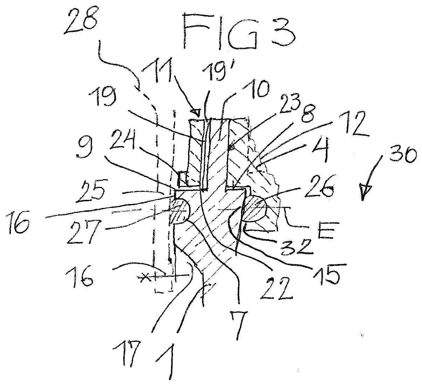

Die Vorrichtung V weist ein optional außen mit Rippen 17 gestaltetes Gehäuse 1 mit zumindest im Wesentlichen koaxialen, das heißt geringfügig höhenversetzten Rohrstutzen 2, 3 zum Installieren in einem Abwasserstrang auf, wobei die Rohrstutzen 2, 3 relativ zum Gehäuse 1 gegebenenfalls ein nicht hervorgehobenes Gefälle definieren können. In den Fig. 1 und 3 ist eine von oben zugängliche Inspektionsöffnung 30 (Fig. 2), durch einen abgedichtet festgelegten Deckel 4 verschlossen. Bei der gezeigten Ausführungsform trägt der Deckel Zusatzeinrichtungen, z.B. einen Einhand-Deckel-Verriegelungs- und -Aushebebügel 5, sowie einen schwenkbaren Verriegelungshebel 6 beispielsweise zum Arretieren einer in Fig. 2 gezeigten Rückstauklappe 14 in deren Schließlage an einem Dichtsitz. In Fig. 2 ist als weiteres Einbauteil eine zweite Rückstauklappe 13 mit ihrem Sitz angedeutet, die im Gehäuse 1 herausnehmbar montiert ist. Alternativ (nicht gezeigt) könnte der Deckel 4 eine Pumpe und/oder einen Antriebsmotor für den Hebel 6 oder andere Zusatzausstattungen tragen, oder frei von Zusatzausstattungen sein.

In der gezeigten Ausführungsform wird der Deckel 4 beispielsweise mit einer nicht gezeigten Nase in eine Einstecktasche im Gehäuse 1 eingeführt, in Richtung der auf einem Öffnungsrand 8 der Inspektionsöffnung 30 markierten Pfeile, bis der Deckel vollständig in der Inspektionsöffnung 30 sitzt, und dann durch Niederdrücken des Hebels 5 verriegelt wird. Hierbei ist, wie auch beim Herausheben des Deckels 4, eine bequeme Einhandbedienung möglich.

Der an sich ebene Öffnungsrand 8 trägt bei der gezeigten Ausführungsform zwei Lagerböcke 33 für den Bügel 5 des Deckels 4, sowie angrenzend an die Lagerböcke 33 an den Längsseiten des Gehäuses jeweils ein Eingriffselement 10 in Form einer vom Öffnungsrand 8 hochstehenden Lasche mit einer hier geraden Innenseite 18 und einer bombierten oder konvex gekrümmten Außenseite 19. Die Außenseite 19 kann zum freien Ende des Eingriffselementes 10 hin abgeschrägt oder abgerundet sein, so dass der Querschnitt zum freien Ende abnimmt. Längsenden 20 des Eingriffselementes 10 sitzen gegebenenfalls mit Spiel in den Stützelementen 11 und können, wie bei 21 angedeutet, zum leichteren Einführen oben abgeschrägt oder abgerundet sein.

In den Fig. 1 und 3 sind die Eingriffselemente 10, die einen langgestreckten, annähernd rechteckigen Querschnitt mit einer Länge aufweisen, die ein Vielfaches der Stärke ist, in am Deckel von dessen Oberseite hochstehende, kaminartige Stützelemente 11 eingesteckt, deren jedes sein Eingriffselement 10 allseits umgreift. Die freien Enden der Eingriffselemente 10 liegen in etwa auf der Höhe der freien Enden der Stützelemente 11. Zum Inneren jedes Stützelementes 11 führt eine Einstecköffnung 22 in der Unterseite des Deckels 4, die durch das kaminartige Stützelement 11 nach oben verlängert wird und beispielsweise annähernd rechteckigen Querschnitt hat.

Der Öffnungsrand 8 wird durch eine Außenkontur 9 begrenzt, in der angrenzend an den Öffnungsrand 8 über einen schmalen Stützrand 16 eine nach außen offene, in einer Ebene (Dichtungsebene E in Fig. 3), umlaufende Dichtungsnut 7 geformt ist. Es begrenzt der Öffnungsrand 8 eine innere Dichtfläche 15 im Gehäuse 1, die zur Zusammenarbeit mit einer in Fig. 3 gezeigten Radialdichtung 26 in einer nach außen offenen Dichtungsnut 32 eines unterseitigen Falzes des Deckels 4 sitzt.

Fig. 1 und 2 zeigen ferner an der Außenseite des Gehäuses 1 in die Rippen 17 eingeformte Verankerungen 16, hier beispielsweise knapp unterhalb der außenliegenden Dichtungsnut 7.

In der Schnittdarstellung in Fig. 3 in der Schnittebene III-III in Fig. 1 ist zu erkennen, dass die Radialdichtung 26 und eine wahlweise einsetzbare Radialdichtung 27 in der außenliegenden Dichtungsnut 7 z.B. eine gemeinsame, am Gehäuse 1 optimal hoch positionierte Dichtungsebene E definieren können. Gestrichelt ist in Fig. 3 ein Dichtkragen 25 einer außen über die Außenkontur 9 gesteckten Schachttasse 28 angedeutet, auf der weitere Schachtteile (Fig. 5 bis 7) montierbar sind, und die in den Verankerungsstellen 16 am Gehäuse 1 bzw. den Versteifungsrippen 17 festgelegt sein kann, wahlweiser (Schachteinbau). Fig. 3 verdeutlicht auch, dass jedes Eingriffselement 10 im Abstand von der Außenkontur 9 auf den Öffnungsrand 8 einstückig angeformt ist, und dass auch jedes Stützelement 11 einen Abstand von der Außenkontur 9 einhält, wie auch ein gegebenenfalls vorgesehener Auflagerand 24 des Deckels 4, so dass daran der Dichtkragen 25 problemlos vorbeiführbar ist.

In Fig. 1 sind zur Aussteifung des Deckels 4 und gegenseitigen Abstützung die beiden Stützelemente 11 durch eine quer verlaufende erhabene Versteifungsrippe 12 an der Oberseite des Deckels 4 verbunden. Das Stützelement 11 definiert sozusagen einen kaminartigen Schacht 23 für den Eingriff des eingesteckten Eingriffselementes 10.

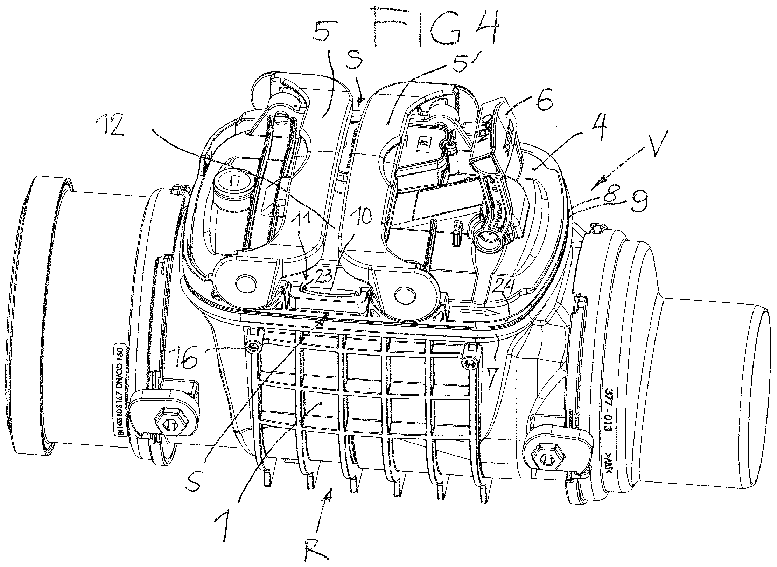

Die Ausführungsform der Vorrichtung V in Fig. 4, ebenfalls eines Rückstauverschlusses R, unterscheidet sich von der der Fig. 1 bis 3 durch eine gegebenenfalls größere Baugröße und einen weiteren Einhand-Deckel-Verriegelungs- und -Aushebebügel 5', der gegensinnig zum Bügel 5 auf dem Deckel 4 schwenkbar gelagert ist und einer zusätzlichen Verriegelung des Deckels 4 in der gezeigten Einbaulage dient (Einhandbedienung). Zum Ausheben des Deckels 4 werden beide Bügel 5, 5' hochgeschwenkt und wird der Deckel 4 mit einer Hand an beiden Bügeln 5, 5' herausgehoben, z.B. bis die erwähnte Einstecknase aus der Einstecktasche in der Inspektionsöffnung austritt und der Deckel schräg hochgehoben werden kann. Bei den zwei getrennt verriegelnden Bügeln 5, 5' könnte die Einstecknase entfallen.

In beiden Ausführungsformen der Fig. 1 und 4 ist zweckmäßig die Eingriffslänge zwischen den Eingriffselementen 10 und den Stützelementen 11 länger gewählt als der Aushebehub des Deckels 4 bei der Entnahme aus der Inspektionsöffnung 30, so dass die Beulsicherungen S zusätzlich die Funktion einer Führungsvorrichtung zum Herausheben und auch zum Einsetzen des Deckels 4 übernehmen können.

Fig. 5 ist eine Seitenansicht der Vorrichtung V beispielsweise gemäß Fig. 1 bis 3 kombiniert mit der schon in Fig. 3 angedeuteten Schachttasse 28 (einer kreisrunden Tasse mit dem Aufsteck- oder Dichtrand 25 entsprechend der Außenkontur 9 des Öffnungsrandes 8 des Gehäuses 1). Da die äußere Dichtungsnut 7 nur ganz knapp unterhalb des Öffnungsrandes 8 positioniert ist, ist dennoch eine sichere Festlegung der Schachttasse 28 sogar oberhalb der Außenkonturen der Rohrstutzen 3, 4 möglich, und braucht das Gehäuse 1 demzufolge nur geringfügig über die Rohrstutzen 3, 4 nach oben überzustehen. Die aufgesteckte Schachttasse 28 ist in den Verankerungsstellen 16 zusätzlich festgelegt.

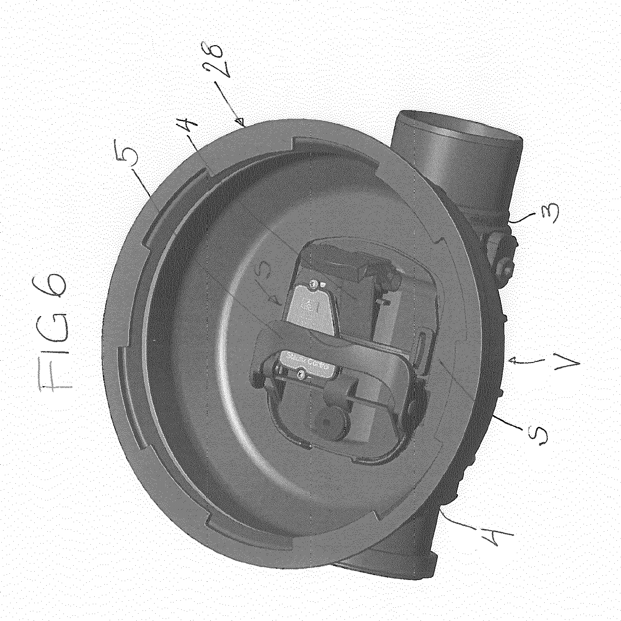

In der zu Fig. 5 gehörigen schrägen Draufsicht der Fig. 6 ist zu erkennen, dass der Deckel 4 am Grund der Schachttasse 28 weitestgehend bündig liegt, so dass nur minimale Flächen und Hinterschneidungen für Verschmutzungen vorliegen. Eventuell vorliegende Verschmutzungen sind so vor Entnahme des Deckels 4 bequem und rasch beseitigbar.

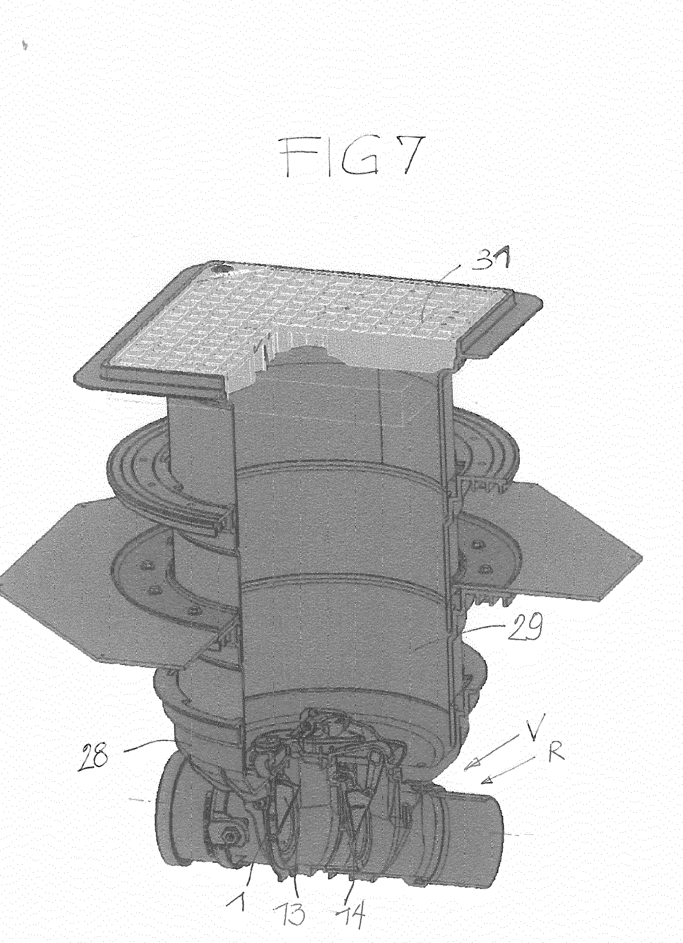

Fig. 7 zeigt als Teilschnittdarstellung und in Weiterführung des Schachteinbauprinzips der Fig. 5 und 6 die Vorrichtung V, hier wiederum einen Rückstauverschluss R, mit der daran abgedichtet festgelegten Schachttasse 28 und den Einbauteilen 13, 14 in einem Schacht 29 aus hier mehreren Schachtelementen, oberseitig verschlossen durch einen Rost 31. Da sich der Schacht 29 über eine erhebliche Höhe erstreckt oder erstrecken kann, ist es wichtig, dass für eine Inspektion oder eine Wartung der Deckel 4 am Grund des Schachtes 29 bequem mit dem Einhandbügel 5 oder den Einhandbügeln 5, 5' herausnehmbar oder einsetzbar ist, da die Zugangsverhältnisse ggf. ungünstig sind.

## Patentansprüche

1. Vorrichtung (V) zur Abwasserführung, insbesondere Rückstauverschluss (R), mit einem eine obenliegende Inspektionsöffnung (30) mit einem eine Außenkontur (9) definierenden Öffnungsrand (8) aufweisenden Gehäuse (1), und einem abgedichtet in der Inspektionsöffnung (30) festlegbaren Deckel (4), wobei zwischen dem Gehäuse (1) und dem Deckel (4) formschlüssige Beulsicherungen (S) vorgesehen sind, wobei als die jeweilige Beulsicherung (S) am Öffnungsrand (8) mindestens ein hochstehendes Eingriffselement (10) und im Deckel mindestens eine Durchstecköffnung (22) mit einem kaminartig in Verlängerung der Durchstecköffnung (22) hochstehenden Stützelement (11) für das Eingriffselement (10) vorgesehen sind, die Durchstecköffnung (22) und das Stützelement (11) das eingesteckte Eingriffselement (10) allseits umfassen, und das Eingriffselement (10) und das Stützelement (11) von der Außenkontur (9) des Öffnungsrandes (8) beabstandet sind, **dadurch gekennzeichnet, dass** für wahlweisen Schachteinbau der Vorrichtung (V) die Außenkontur (9) des Öffnungsrandes (8) über einen Stützrand (16) angrenzend an den Öffnungsrand (8) und die Beulsicherungen (S) eine umlaufende, nach außen offene Dichtungsnut (7) für eine Schachttassen-Radialdichtung (27) aufweist.

2. Vorrichtung nach Anspruch 1, **dadurch gekennzeichnet, dass** sich das eingesteckte Eingriffselement (10) mit einer gegenseitigen Eingriffsüberdeckung größer als ein Aushebehub einer Deckel-Radialdichtung (26) aus der Inspektionsöffnung (30) zumindest bis zum freien Ende des Stützelementes (11) erstreckt.

3. Vorrichtung nach wenigstens einem der vorhergehenden Ansprüche, **dadurch gekennzeichnet, dass** die Beulsicherungen (S) Führungsvorrichtungen zum Einbringen und Ausheben der an einem unterseitigen Falz (32) des Deckels (4) angeordneten Deckel-Radialdichtung (26) in die und aus der Inspektionsöffnung (30) bilden.

4. Vorrichtung nach Anspruch 1, **dadurch gekennzeichnet, dass** das Eingriffselement (10) in Verlaufsrichtung der Längsseite des Öffnungsrandes (8) einen annähernd rechteckigen, langgestreckten Vollquerschnitt aufweist, dessen Länge ein Vielfaches der Stärke beträgt, wobei, vorzugsweise, der Querschnitt in Richtung zum freien Ende des Eingriffselements (10) allmählich abnimmt, die Innenseite (10) des Eingriffselements (10) gerade und die Außenseite (19) konvex gekrümmt sind, und dass der Innenquerschnitt des Stützelements (11) annähernd rechteckig ist.

5. Vorrichtung nach wenigstens einem der vorhergehenden Ansprüche, **dadurch gekennzeichnet, dass** in Bezug auf die Inspektionsöffnung (30) gegenüberliegende Stützelemente (11) auf der Deckeloberseite über eine eingegliederte Verteilungsrippe (12) verbunden sind.

6. Vorrichtung nach Anspruch 1, **dadurch gekennzeichnet, dass** die nach außen offene Dichtungsnut (7) in einer zumindest in etwa zum Öffnungselement (8) parallelen Dichtebene (E) verläuft, vorzugsweise in etwa auf dergleichen Höhe wie die Deckel-Radialdichtung (26) bei eingesetztem Deckel (4).

7. Vorrichtung wenigstens einem der vorhergehenden Ansprüche, **dadurch gekennzeichnet, dass** das Gehäuse (1) im Wesentlichen zum Öffnungsrand (8) parallele und höhenversetzte Rohrstutzen (3, 4) aufweist und dass die durch die Dichtungsnut (7) definierte Dichtebene (E) oberhalb der Kontur der Rohrstutzen (3, 4) platziert ist.

8. Vorrichtung nach wenigstens einem der vorhergehenden Ansprüche, **dadurch gekennzeichnet, dass** auf dem Gehäuse (1) eine Schachttasse (28), vorzugsweise eines die Vorrichtung (V) zugänglich enthaltenden Schachts (29), montiert ist, dass die Schachttasse (28) mit einem Haltekragen (25) an der in der Dichtungsnut (7) angeordneten Radialdichtung (27) abgedichtet und an der Außenseite des Gehäuses (1) in Verankerungsstellen (16) verankert ist.

## Claims

1. Device (V) for guiding waste water, particularly a back flow stopper (R), comprising a housing (1) having a top side inspection opening (30) and an opening edge (8) defining an outer contour (9), and a cover lid (4) for being fixed in sealed fashion in the inspection opening (30), wherein form-fit buckling protections (S) are provided between the housing (1) and the cover lid (4), wherein as the respective protection (S) at least one upright standing engagement element (10) if provided at the opening edge (8) and at least one passing opening (22) is provided in the cover lid (4) including an upright standing supporting element (11) for the engagement element (10) in a chimney-like prolongation of the passing opening (22), the passing opening (22) and the supporting element (11) surrounding the inserted element (10) at all sides, and the engaging element (10) and the supporting element (11) being distant from the outer contour (9) of the opening edge (8), **characterized in that** for a selective shaft installation of the device (V) the outer contour (9) of the opening edge (8) comprises an outwardly open surrounding sealing groove (7) for mounting a shaft cup radial sealing (27), the sealing groove (7) being situated via a supporting edge (16) adjacently to the opening edge (8) and the buckling protections (S).

2. Device according to claim 1, **characterized in that** the inserted engagement element (10) extends at least to the free end of the supporting element (11) with a mutual engagement overlap larger than a lifting stroke of a cover lid radial sealing (26) out of the inspection opening (30) at least through the free end of the supporting element (11).

3. Device according to at least one of the preceding claim, **characterized in that** the buckling protections (S) form guiding devices for inserting and removing the cover lid radial sealing (26) into the and out of the inspection opening (30), the cover lid radial sealing (26) being arranged at a rebate (32) in the lower side of the cover lid (4).

4. Device according to claim 1, **characterized in that** the engagement element (10) in the direction of the longitudinal side of the opening edge (8) with a substantially square and longitudinally extending full-cross section, the length of which amounts to a multiple of the thickness, wherein, preferably, the cross section gradually decreasing in the direction to the free end of the engagement element (10), the inner side of the engagement element (10) being straight and the outer side (19) being curved convexly, and that the inner cross section of the supporting element (11) is substantially square.

5. Device according to at least one of the preceding claims, **characterized in that** supporting elements (11) being situated opposite to each other in relation to the inspection opening (30) are interconnected on the upper side of the cover lid by an incorporated reinforcing rib (12).

6. Device according to claim 1, **characterized in that** the outwardly open sealing groove (7) extends in a sealing plane (E) of the housing (1) being substantially parallel to the opening edge (8), preferably, about at same height as the cover lid radial sealing (26) mounted at the inserted cover lid (4).

7. Device according to at least one of the preceding claims, **characterized in that** the housing (1) has pipe sockets (3, 4) being substantially parallel to the opening edge (8) and being offset in height direction, and that the sealing plane (E) defined by the sealing groove (7) is placed above the contour of the pipe sockets (3, 4).

8. Device according to at least one of the preceding claims, characterized that in that a shaft cup (28), preferably of a shaft (29) accessibly containing the device (V) is mounted on the housing (1), and that the shaft cup (28) is sealed via a holding collar (25) at the radial sealing (27) mounted in the sealing groove (7) and is secured in anchoring points (16) at the outer side of the housing (1).

## Revendications

1. Dispositif (V) pour l'évacuation d'eaux usées, en particulier fermeture anti-refoulement (R), avec un boîtier (1) présentant une ouverture d'inspection (30) sur le dessus avec un bord d'ouverture (8) définissant un contour extérieur (9), et avec un couvercle (4) pouvant être fixé de manière étanche dans l'ouverture d'inspection (30), des dispositifs de sécurité de flambage (S) à engagement positif étant prévus entre le boîtier (1) et le couvercle (4), dans lequel au moins un élément d'engagement (10) vertical est prévu comme protection contre le flambage (S) respective sur le bord (8) de l'ouverture et au moins une ouverture de passage (22) avec un élément de support (11) pour l'élément d'engagement (10), lequel élément de support (11) est vertical à la manière d'une cheminée dans le prolongement de l'ouverture de passage (22), est prévue dans le couvercle, l'ouverture de passage (22) et l'élément de support (11) entourent de tous côtés l'élément d'engagement (10) inséré, et l'élément d'engagement (10) et l'élément de support (11) sont espacés du contour extérieur (9) du bord de l'ouverture (8), **caractérisé en ce que** que, pour le montage facultatif du dispositif (V) sur l'arbre, le contour extérieur (9) du bord d'ouverture (8) présente, par-dessus un bord d'appui (16) adjacent au bord d'ouverture (8) et aux protections contre le flambage (S), une rainure d'étanchéité (7) périphérique, ouverte vers l'extérieur, pour un joint radial (27) de la cuvette d'arbre.

2. Dispositif selon la revendication 1, **caractérisé en ce que** l'élément d'engagement inséré (10) s'étend avec un chevauchement d'engagement mutuel plus grossier qu'une course de soulèvement d'un joint radial de couvercle (26) depuis l'ouverture d'inspection (30) au moins jusqu'à l'extrémité libre de l'élément de support (11).

3. Dispositif selon au moins une des revendications précédentes, **caractérisé en ce que** les protections contre le flambage (S) forment des dispositifs de guidage pour l'introduction et l'extraction du joint radial du couvercle (26) disposé sur un pli inférieur (32) du couvercle (4) dans et hors de l'ouverture d'inspection (30).

4. Dispositif selon la revendication 1, **caractérisé en ce que** l'élément d'engagement (10) présente une section transversale complète allongée, approximativement rectangulaire, dans la direction du côté longitudinal du bord de l'ouverture (8), dont la longueur est un multiple de l'épaisseur, où, de préférence, la section transversale diminue progressivement vers l'extrémité libre de l'élément d'engagement (10), la face intérieure (10) de l'élément d'engagement (10) est droite et la face extérieure (19) est courbée de manière convexe, et que la section transversale intérieure de l'élément de support (11) est approximativement rectangulaire.

5. Dispositif selon au moins une des revendications précédentes, **caractérisé en ce que**, en ce qui concerne l'ouverture d'inspection (30), des éléments de support opposés (10) sur le côté supérieur du couvercle sont reliés par une nervure de distribution intégrée (12).

6. Dispositif selon la revendication 1, **caractérisé en ce que** la rainure d'étanchéité (7) ouverte vers l'extérieur s'étend dans un plan d'étanchéité (E) au moins approximativement parallèlement à l'élément d'ouverture (8), de préférence approximativement à la même hauteur que le joint radial du couvercle (26) lorsque le couvercle (4) est inséré.

7. Dispositif selon au moins l'une des revendications précédentes, **caractérisé en ce que** le boîtier (1) présente des tubulures (3, 4) sensiblement parallèles au bord de l'ouverture (8) et décalées en hauteur, et que le plan d'étanchéité (E) défini par la rainure d'étanchéité (7) est placé au-dessus du contour des tubulures (3, 4).

8. Dispositif selon au moins une des revendications précédentes, **caractérisé en ce qu'**une cuvette d'arbre (28), de préférence un arbre (29) contenant le dispositif (V) de manière accessible, est montée sur le boîtier (1), **en ce que** la cuvette d'arbre (28) est rendue étanche par un collier de retenue (25) sur le joint radial (27) disposé dans la rainure d'étanchéité (7) et est ancrée sur le côté extérieur du boîtier (1) dans des points d'ancrage (16).
